(19) Europäisches Patentamt

European Patent Office

Office européen des brevets

(11) **EP 0 725 304 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **94923108.8**

(22) Anmeldetag: **11.07.1994**

(51) Int Cl.[7]: **G02F 1/15**, C09K 9/02

(86) Internationale Anmeldenummer:
**PCT/RU94/00147**

(87) Internationale Veröffentlichungsnummer:
**WO 96/002017 (25.01.1996 Gazette 1996/05)**

(54) **ELEKTROCHROME KOMPOSITION**

ELECTROCHROMIC COMPOSITION

COMPOSE ELECTROCHROMIQUE

(84) Benannte Vertragsstaaten:
**DE FR GB SE**

(43) Veröffentlichungstag der Anmeldung:
**07.08.1996 Patentblatt 1996/32**

(73) Patentinhaber: **FGUP GOSUDARSTVENNY NAUCHNY TSENTR "NAUCHNO-ISSLEDOVATELSKY INSTITUT ORGAINCHESKIKH POLUPRODUKTOV I KRASITELEI"(GNTS "NIOPIK") Moscow, 103787 (RU)**

(72) Erfinder:
- **GAVRILOV, Vladimir Ivanovich Dolgoprudny, 141700 (RU)**
- **SHELEPIN, Igor Viktorovich Dolgoprudny, 141700 (RU)**

(74) Vertreter: **Beetz & Partner Patentanwälte Steinsdorfstrasse 10 80538 München (DE)**

(56) Entgegenhaltungen:
**SU-A- 566 863          US-A- 4 326 777
US-A- 4 902 108**

- **DATABASE WPI Section Ch, Week 9413 Derwent Publications Ltd., London, GB; Class E12, AN 94-107563 XP002026897 & SU 972 815 A (GAVRILOV V I) , 15.Oktober 1993**
- **DATABASE WPI Section Ch, Week 9435 Derwent Publications Ltd., London, GB; Class E12, AN 94-284661 XP002026898 & RU 2 009 530 C (MOSC NIOPIK RES PRODN ASSOC) , 15.März 1994**

**Beschreibung**

Gebiet der Technik

Die Erfindung bezieht sich auf Elektrochromkompositionen auf der Grundlage organischer Verbindungen, die in Vorrichtungen mit einem elektrisch steuerbaren Lichtabsorptionswert verwendet werden.

Stand der Technik

Vorbekannt ist eine hochreversible organische Elektrochromkomposition, wo man als kathodische Komponente ein Diperchlorat oder Di(Tetrafluorborat) 1,1'-Dimethyl-4,4'-dipyridin und als anodische Komponente 3- Ethyl-2-benzthiazolona zin im Medium eines organischen Loesungsmittels verwendet - I. W. Schelepin, O. A. Uschakov, N. I. Karpova, W. A. Baratschewskij, "Elektrochimija" 13, 32, 1977 oder seine Modifikation, in der man als anodische Komponente 5,10-Dihydro-5,10-dimethylphenazin verwendet - I. W. Schelepin, W. I. Gawrilov, W. A.Baratschewskij, N. I. Karpova, "Elektrochimija", 13, 404, 1977. Vorbekannt sind ebenso Elektrochromkompositionen, in welchen der Kreis von 4,4'-Dipyridinsalzen erweitert ist, und wo man als anodische Komponente ausser den anderen bekannten organischen Stoffen, die die reversiblen Redoxpaare bei der Elektrooxydation bilden, 5,10-Dihydro-5,10-dimethylphenazin und Derivate desselben verwendet - US-PS No. 4 902 108. Als Medium wurden organische Lösungsmittel (darunter auch Propylenkarbonat) eingesetzt.

Nachteilig bei saemtlichen oben beschriebenen Kompositionen ist das Nichtvorhandensein der Zeitkonstanz der Relaxation der gelenkten Absorption der Komposition bei dauernden Einwirkungen der elektrischen Spannung, was eine Folge der Entstehung des Effektes "Schichtung" des elektrogefärbten Zustandes der Komposition ist.

Vorbekannt ist eine Elektrochromkomposition, welche als kathodische Komponente Di(Dicarbaundekaborat) 1,1'-4,4'-Dipyridin, als eine anodische Komponente - Ferrozen-Derivate einschließt. Als Lösungsmittel dient darin γ-Butyrolakton - UdSSR-Urheberschein No. 972 815. Diese Elektrochromkomposition weist das nachfolgende Verhältnis von Ingredienzien (in Masse-%) auf: 1,1'-Dimethyl-4,4'-dipyridin-dicarbaundekaborat- 2-10; Ferrozen-Derivat - 1-4; γ-Butyrolakton - Rest.

Bei dieser Komposition fehlt der Effekt der Schichtung von elektrogefärbten Formen der Komponenten der Komposition, und die Zeit der Relaxation der gelenkten Absorption der Stoffschicht erweist sich bei Einwirkung elektrischer Spannung als konstant. Aber wie die Größen der Grenzströme der Voltampereabhängigkeiten einer Elektrochromvorrichtung mit einer vorgegebenen Zusammensetzung zeigten, ist die Haltbarkeitsdauer einer solchen Komposition beschränkt, was mit ihrer Zeitinstabilität zusammenhängt. Das letztere tritt in Erscheinung in der Verminderung der Größe der Grenzströme mit der Zeit, was auf eine unkontrollierbare Abnahme der Konzentration von elektroaktiven Komponenten (bzw. Komponente ) mit der Zeit hinweist.

Aus der Druckschrift RU-2 009 530 sind elektrochrome Zusammensetzungen bekannt, die 1,1'-Dimethyl-4,4'-dipyridinium bzw. 1,1'-Dibenzyl-4,4'-dipyridinium mit BF- oder CIO-Anionen als kathionische Komponente, ein Ferrocenderivat als anionische Komponente und Propylencarbonat als Lösungsmittel enthalten.

Offenbarung der Erfindung

Der Erfindung wurde die Aufgabe zugrunde gelegt, eine Elektrochromkomposition zu entwickeln, welche eine erhöhte Haltbarkeitsdauer ihres Komponentenverhältnisses aufweist.

Die gestellte Aufgabe wird dadurch gelöst, daß eine Elektrochromkomposition vorgeschlagen ist, welche als eine kathodische Komponente Di(Dicarbaundekaborat) 1,1'-Dimethyl-4,4'-dipyridin oder Di(Dicarbaundekaborat) 1,1'-Dibenzyl-4,4'-dipyridin, als eine anodische Komponente 5,10-Dihydro-5,10-dimethylphenazin und als ein Lösungsmittel Propylenkarbonat bei folgendem Verhältnis der Ingredienzien (in Masse-%) einschließt:

| kathodische Komponente | |
|---|---|
| Di(Dicarbaundekaborat) 1,1'-Dimethyl-4,4'-dipyridin oder | 0.4-3.6 |
| Di(Dicarbaundekaborat) 1,1'-Dibenzyl-4,4'-dipyridin | 0.5-4.7 |
| anodische Komponente | |
| 5,10-Dihydro-5,10-dimethylphenazin Propylenkarbonat Rest. | 0.2-1.4 |

Der obere Grenzwert der Konzentrationen der Ingredienzien der Komposition beschränkte sich auf die Forderung einer gleichmäßigen Färbung der Elektrochromvorrichtung. Bei höheren Konzentrationen im Vergleich zu den angemeldeten wird infolge des endlichen Oberflächenwiderstandes der optisch durchsichtigen elektrisch leitenden Überzüge ($In_2O_3$) die Ungleichmäßigkeit der Stromverteilung auf der Oberfläche der Elektroden beträchtlich vergrößert, und es wird als Folge die Gleichmäßigkeit der optischen Absorption bei der Färbung beträchtlich verletzt. Der untere Grenzwert der Konzentrationen wurde durch eine niedrige Lichtabsorption im elektrisch gefärbten Zustand, der für die praktische Verwendung nicht geeignet ist, bestimmt.

Der Vorteil der anmeldungsgemäßen Erfindung besteht darin, daß die anmeldungsgemäße Komposition eine beträchtliche Verlängerung der Dauer der Haltbarkeit der elektroaktiven Komponenten (bzw. Komponente) über die Zeit sicherstellt. Man erhielt Di(Dicarbaundekaborat) 1,1'-dibenzyl-4,4'-diperidin aus Dijodid von 1,1'-Dibenzyl-4,4'-dipyridinium durch Austauschreaktion von Anionen mit Kaliumdicarbaundekaborat - UdSSR-Ureheberschein 972 815.

Die Methodik der Kontrolle der Dauer der Haltbarkeit der Komposition über die Zeit bestand in folgendem. Man nahm aus den zubereiteten Kompositionen Proben nach bestimmten Zeitintervallen und testete sie in Elektrochromvorrichtungen zwecks Beurteilung der Aenderung des Gehaltes an elektroaktiven Komponenten der Komposition.

Die Elektrochromvorrichtungen bestanden aus zwei Glasplatten mit einer Groesse von 40x60 mm mit den auf die inneren Seiten aufgebrachten Halbleiterueberzuegen aus $In_2O_3$ mit Legierungszusaetzen. Der Abstand zwischen den Platten wurde durch die Dicke der Teflonzwischenlage bestimmt, in deren Mitte eine Oeffnung mit einem Durchmesser von 18 mm vorhanden war. Die Dicke der Teflonzwischenlage betrug 100-150 $\mu$ . Den Raum, der von den Platten und der Teflonzwischenplatte beschraenkt war, fuellte man mit der zu testenden Komposition aus. Zum hermetischen Verschliessen wurde die Vorrichtung durch Schraubzwingen zusammengezogen. Auf die Elektroden gab man eine Linearauslenkung einer Dreieckspannung mit einer Geschwindigkeit V = 2 mV/s von einem Potentiostat, der mit dem Programmator verbunden war. Anhand der Volt-ampèreabhaengigkeiten, die von dem Zweikoordinatenpotentiometer fixiert werden, bestimmte man nach dem Erreichen der Reproduzierbarkeit den Wert des Grenzstroms $I_{Grenz.}^{Ausg.}$ fuer die frisch zubereitete Komposition, und $I_{Grenz.}$ fuer die Komposition nach Lagerung im Laufe einer Zeit. Die Groesse des Verhaeltnisses $I_{Grenz.}$ zu $I_{Grenz.}^{Ausg.}$

$$\delta = \frac{I_{Grenz.}}{I_{Grenz.}^{Ausg.}}$$

kennzeichnete eine Aenderung des Inhaltes von elektroaktiven Ingredienzien der in der Elektrochromvorrichtung arbeitenden Komposition fuer die Zeitperiode der zeitweiligen Lagerung. Die Groesse diente als Kriterium der Dauer der Haltbarkeit der Komposition. Der Eins nahe Wert zeugte von Konstanz der Komposition über die Zeit, und die Zeit, in deren Laufe dieser Wert erhalten war, wies auf die Frist der Haltbarkeit der Komposition hin.

Vergleichs-Beispiel 1.

In 50 ml Propylenkarbonat loest man 0.57 g (0.9%) Di(Dicarbaundekaborat)1,1'-Dimethyl-4,4'-dipyridin und 0.47 g (0.8 %) einer Mischung aus Mono-, Di-, Tri-tert. Butylferrozen auf, die 60% Mono-tert.Butylferrozen, 20 + 35% Isomere von Di-tert.Butylferrozen, bis 5%-Isomere von 3-tetrt.Butylferrozen enthaelt. Mit der erhaltenen Loesung fuellt man die Elektrochromvorrichtung mit einem Abstand zwischen den Elektroden von 150$\mu$ aus. Im Ausgangszustand ist die Komposition in der Schicht der Elektrochromvorrichtung nicht gefaerbt. Bei Uberlagerung einer Linearauslenkung einer Dreieckspannung auf die Vorrichtung bei V = 2 mV/s im Intervall der Spannungen von 0 bis 1,05 V bekommt die Komposition eineblaue Faerbung und wird dann farblos. Das Verhaeltnis $\delta$ von $I_{Grenz.}$ U,I-Abhaengigkeiten, die nach Ablauf der Lagerfrist der Komposition von 1.5; 3; 7; 9 Monaten gemessen sind, zum Wert $I_{Grenz.}^{Ausg.}$ , der unmittelbar nach der Herstellung der Komposition erhalten ist, ist jeweils 0.98; 0.87; 0.87; 0.96.

Beispiel 2.

In 50 ml Propylenkarbonat loest man 0.24 g (0.4%) Di(Dicarbaundekaborat) 1,1'-Dimethyl-4,4'-dipyridin und 0.12 g (0.20%) 5,10-Dihydro-5,10-dimethylphenazin auf. Mit der erhaltenen Loesung fuellt man die Elektrochromvorrichtung mit Abstaenden zwischen den Elektroden von 150$\mu$ aus. Im Ausgangszustand ist die Komposition in der Schicht der Elektrochromvorrichtung schwach gruen. Bei der Ueberlagerung einer Linearauslenkung einer Dreieckspannung auf die Vorrichtung bei V = 2 mV/s im Intervall der Spannungen von 0 bis 1.00 V bekommt die Komposition eine intensive blau-gruene Faerbung und geht dann wiederum in den Ausgangzustand ueber. Das Verhaeltnis $\delta$ von $I_{Grenz.}$ U,I-Abhaengigkeiten, die nach Ablauf der Lagerfrist der Komposition von 1.5; 3 und 7 Monaten gemessen sind, zum Wert $I_{Grenz.}^{Ausg.}$ , der unmittelbar nach der Herstellung der Komposition erhalten ist, betrug jeweils 0.99; 0.96; 0.95.

Beispiel 3.

In 50 ml Propylenkarbonat loest man 3.00 g (4.7 %) Di (Dicarbaundekaborat) 1,1'-Dibenzyl-4,4'dipyridin und 0.90 g (1.4%) 5,10-Dihydro-5,10-dimethylphenasin auf. Mit der erhaltenen Loesung fuellt man die Elektrochromvorrichtung mit einem Abstand zwischen den Elektroden von 100μ aus. Im Ausgangszustand ist die Komposition in der Schicht der Elektrochromvorrichtung nicht gefaerbt. Bei der Ueberlagerung einer Linearauslenkung einer Dreieckspannung auf die Vorrichtung bei V = 2 mV/s im Intervall der Spannungen von 0 bis 1.00 V bekommt die Komposition die blau-gruene Faerbung und geht dann wiederum in den Ausgangszustand ueber. Das Verhaeltnis δ von $I_{Grenz.}$ U,I-Abhaengigkeiten, die nach Ablauf der Lagerfrist der Komposition von 1.5; 3 und 7 Monaten gemessen sind, zum Wert $I_{Grenz.}^{Ausg.}$, der unmittelbar nach der Herstellung der Komposition erhalten ist, betrug jeweils 1.01; 0.98; 0.94.

Beispiel 4.

In 50 ml Propylenkarbonat loest man 1.50 g (2.4%) Di(Dicarbaundekaborat) 1,1'-Dibenzyl-4,4'-dipyridinium und 0.50 g (0.8 %) 5,10-Dihydro-5,10-dimethylphenazin auf. Mit der erhaltenen Loesung fuellt man die Elektrochromvorrichtung mit einem Abstand zwischen den Elektroden von 100 μ aus. Im Ausgangszustand ist die Komposition in der Schicht der Elektrochromvorrichtung praktisch nicht gefaerbt. Bei der Ueberlagerung einer Linearauslenkung einer Dreieckspannung auf die Vorrichtung bei V = 2 mV/s im Intervall der Spannungen von 0 bis 1.00 V bekommt die Komposition die blau-gruene Faerbung und geht dann wiederum in den Ausgangszustand ueber. Das Verhaeltnis δ von $I_{Grenz.}$ U, I-Abhaengigkeiten, die nach Ablauf der Lagerfrist der Komposition von 1.5; 3 und 7 Monaten gemessen sind, zum Wert $I_{Grenz.}^{Ausg.}$, der unmittelbar nach der Herstellung der Komposition erhalten ist, betrug jeweils 1.04; 0.99; 0.96.

Vergleichs-Beispiel 5.

In 50 ml Propylenkarbonat loest man 2.30 g (3.6%) Di(Dicarbaundekaborat) 1,1'-Dimethyl-4,4'-dipyridinium und 1.90 g (3.0 %) einer Mischung von Mono-, Di-, Tri-tert.Butylferrozen auf. Mit der erhaltenen Loesung fuellt man die Elektrochromvorrichtung mit einem Abstand zwischen den Elektroden von 100 μ aus. Im Ausgangszustand ist die Komposition in der Schicht der Elektrochromvorrichtung nicht gefaerbt. Bei der Ueberlagerung einer Linearauslenkung einer Dreieckspannung auf die Vorrichtung bei V = 2 mV/s im Intervall der Spannungen von 0 bis 1.05 V bekommt die Komposition die blaue Faerbung und geht dann wiederum in den nicht gefaerbten Zustand ueber. Das Verhaeltnis δ von $I_{Grenz.}$ U,I-Abhaengigkeiten, die nach Ablauf der Lagerfrist der Komposition von 1.5; 3; 7 und 9 Monaten gemessen sind, zum Wert $I_{Grenz.}^{Ausg.}$, der unmittelbar nach der Herstellung der Komposition erhalten ist, betrug jeweils 0.98; 0.96; 0.96 und 0.94.

Vergleichs-Beispiel 6.

In 50 ml Propylenkarbonat loest man 0.30 g (0.5%) von Di(Dicarbaundekaborat) 1,1'-Dibenzyl-4,4'-dipyridin und 0.19 g, (0.3%) Mono-, Di-, Tri-tert. Butylferrozen auf. Mit der erhaltenen Loesung fuellt man die Elektrochromvorrichtung mit einem Abstand zwischen den Elektroden von 150 μ aus. Im Ausgangszustand ist die Komposition in der Schicht der Elektrochromvorrichtung nicht gefaerbt. Bei der Ueberlagerung einer Linearauslenkung einer Dreieckspannung auf die Vorrichtung 5 bei V = 2 mV/s im Intervall der Spannungen von 0 bis 1.05 V bekommt die Komposition eine blaue Faerbung und geht dann wiederum in einen nicht gefaerbten Zustand ueber. Das Verhaeltnis δ von $I_{Grenz.}$ U,I-Abhaengigkeiten, die nach Ablauf der lagerfrist der Komposition von 1.5; 3; 7 und 9 Monaten gemessen sind, zum Wert $I_{Grenz.}^{Ausg.}$, der unmittelbar nach der Herstellung der Komposition erhalten ist, betrug jeweils 1.03; 0.97; 0.97.

Vergleichsbeispiel (UdSSR-Urheberschein 972815).

In 50 ml γ-Butyrolakton loest man 0.57 g (1.0%) Di(Dicarbaundekaborat) 1,1'-Dimethyl-4,4'-dipyridin und 0.47 g (0.8%) einer Mischung von Mono-, Di-, Tri-tert. Butylferrozen auf. Mit der erhaltenen Loesung fuellt man die Elektrochromvorrichtung mit einem Abstand zwischen den Elektroden von 150μ aus. In Ausgangsstellung ist die Komposition in der Schicht der Elektrochromvorrichtung nicht gefaerbt. Bei der Überlagerung einer Linearauslenkung einer Dreieckspannung auf die Vorrichtung bei V=2mV/s im Intervall der Spannungen von 0 bis 1.05 V bekommt die Komposition die blaue Faerbung und wird danach farblos. Das Verhaeltnis δ von $I_{Grenz.}$ - Voltamperenabhaengigkeiten der Elektrochromvorrichtung mit der Komposition mit der Lagerfrist von 3, 7 und 9 Monaten zum Wert $I_{Grenz.}^{Ausg.}$, der unmittelbar nach der Herstellung der Komposition erhalten ist, betrug jeweils 0.70. 0.60 und 0.52.

Tabelle

| Komposition nach Beispielen | $\alpha, \mu$ | $\delta$ | | | |
|---|---|---|---|---|---|
| | | =1.5 Mon. | =3 Mon. | =7 Mon. | =9 Mon. |
| Urheberschein | 150 | - | 0.70 | 0.60 | 0.52 |
| 1 | 150 | 0.98 | 0.87 | 0.87 | 0.96 |
| 2 | 150 | 0.99 | 0.96 | 0.95 | - |
| 3 | 100 | 0.01 | 0.98 | 0.94 | - |
| 4 | 100 | 1.04 | 0.99 | 0.96 | - |
| 5 | 100 | 0.98 | 0.96 | 0.96 | 0.94 |
| 6 | 150 | 1.03 | 1.00 | 0.97 | 0.97 |
| $\alpha$ - Dicke der Schicht der Probe der Elektrochromkomposition in $\mu$ | | | | | |

Industrielle Anwendbarkeit

Eine weitgehende Anwendung werden die vorgesch lagenen Elektrochromkompositionen in der Kraftfahrzeugindustrie bei der Entwicklung von Tafeln fuer den Schutz der Augen des Fahrers vor Gegenblendung bei Nacht finden. Ebenso koennen solche Kompositionen bei der Herstellung von Innen- und Aussen-Rueckblickspiegeln ausgenutzt werden. Spiegel mit elektrisch steuerbaren Elektrochrom-Lichtfiltern einer variablen optischen Dichte werden die Augen des Fahrers vor blendenden Lichtblitzen von Scheinwerfern der hinter her fahrenden Fahrzeugen in der Nacht schuetzen. Solche sich automatisch verdunkelnden Elektrochromspiegel werden die Spiegel mit einem konstanten Koeffizienten der Lichtreflexion ersetzen, die in Fahrzeugen zur Zeit verwendet werden.

**Patentansprüche**

1.   Elektrochromkomposition, die eine kathodische komponente, eine anodische Komponente und als Lösungsmittel Propylencarbonat enthält, **dadurch gekennzeichnet, daß** als kathodische Komponente Di(Dicarbaundekaborat)-1,1'-Dimethyl-4,4'-dipyridinium oder Di(Dicarbaundekaborat)-1,1'-Dibenzyl-4,4'-dipyridinium und als anodische Komponente 5,10-Dihydro-5,10-Dimethylphenazin eingesetzt wird, wobei folgendes Verhältnis von Ingredientien in Masse-% verwendet wird:

| Kathodische Komponte: | |
|---|---|
| Di(Dicarbaundekarborat)-1,1'-Dimethyl-4,4'-dipyridinium | 0,4 - 3,6 |
| oder | |
| Di(Dicarbaundekaborat)-1,1'-Dibenzyl-4,4'-dipyridinium | 0,5 - 4,7 |
| Anodische Komponente: | |
| 5,10-Dihydro-5,10-Dimethylphenazin | 0,2 - 1,4 |
| Propylencarbonat | Rest. |

**Claims**

1.   An electrochromic composition which contains a cathodic component, an anodic component and propylene carbonate as a solvent, **characterized in that** di(dicarbaundecaborate)-1,1'-dimethyl-4,4'-dipyridinium or di(dicarbaundecaborate)-1,1'-dibenzyl-4,4'-dipyridinium is used as the cathodic component and 5,10-dihydro-5,10-dimethyl phenazine is used as the anodic component, the following ratio of ingredients in mass % being used:

| Cathodic component: | |
|---|---|
| di(dicarbaundecaborate)-1,1'-dimethyl-4,4'-dipyridinium<br>or | 0,4 to 3,6 |
| di(dicarbaundecaborate)-1,1'-dibenzyl-4,4'-dipyridinium | 0,5 to 4,7 |
| Anodic component: | |
| 5,10-dihydro-5,10-dimethyl phenazine<br>propylene carbonate | 0,2 to 1,4<br>remainder. |

## Revendications

1. Composition électrochromique, qui contient un composant cathodique, un composant anodique et du carbonate de propylène comme solvant, **caractérisée en ce que** le composant cathodique utilisé est le di(dicarbaundécaborate)-1,1'-diméthyl-4,4'-dipyridinium ou le di(dicarba-undécaborate)-1,1'-dibenzyl-4,4'-dipyridinium et le composant anodique utilisé est la 5,10-dihydro-5,10-diméthylphénazine, les ingrédients étant utilisés dans les proportions suivantes, en % en masse :

| composant cathodique : | |
|---|---|
| di(dicarba-undécaborate)-1,1'-diméthyl-4,4'-dipyridinium | 0,4 - 3,6 |
| ou | |
| di(dicarba-undécaborate)-1,1'dibenzyl-4,4'-dipyridinium | 0,5 - 4,7 |
| composant anodique : | |
| 5,10-dihydro-5,10-diméthylphénazine | 0,2 - 1,4 |
| carbonate de propylène | le reste. |